# EUROPEAN PATENT APPLICATION

(11) **EP 4 201 986 A1**
(43) Date of publication of application: **28.06.2023**
(21) Application number: 21306910.7
(22) Date of filing: 23.12.2021
(51) Int. Cl.: C08J 9/32, C08J 9/00, C08L 33/04, C08K 7/28, C08J 9/14

(54) **FOAM COMPOSITION**

(71) Applicant: Bostik SA, 92700 Colombes (FR)
(72) Inventor: AELTERMAN, Alain, 4903 RC Oosterhout (NL); GUBA, Anett, 01936 Schwepnitz (DE); TER SCHURE, Bas, 4903 RC Oosterhout (NL); LIGTVOET, Lucas, 4903 RC Oosterhout (NL); VAN BEERS, Robbert, 4903 RC Oosterhout (NL)
(74) Representative: Arkema Patent

(57) **Abstract**

It is provided a foam composition particularly comprising a binding agent, a filler, a dispersing agent, a lubricating agent, and a solvent, said foam composition being packaged with a propellant. The foam, obtained upon dispensing the foam composition, is particularly suitable for use on all indoor applications, for example for closing gaps in partition walls and floors, for sealing pipe penetrations through walls and ceiling, and for sealing linear joints. The foam composition provides improved mechanical properties upon dispensing and applications.

## Description

### Technical field

The present invention belongs to the field of building construction. The present invention relates to a foam composition particularly comprising a binding agent, a filler, a dispersing agent, a lubricating agent, and a solvent, said foam composition being packaged with a propellant. The foam, obtained upon dispensing the foam composition, is particularly suitable for use on all indoor applications, for example for closing gaps in partition walls and floors, for sealing pipe penetrations through walls and ceiling, and for sealing linear joints. The foam composition provides improved mechanical properties upon dispensing and applications.

### Technical background

In the field of building construction, coating foams are conventionally used in various applications, particularly for their properties with regards to their sealing capability, acoustics, thermal insulation, fire retardation, etc.

Polyurethane foams are widespread within the field, for their satisfactory properties and for their large spectrum of applications. However, the use of the polyurethane foams is currently under scrutiny, as the environmental regulations, particularly in North American and within the European Union, are increasingly becoming stricter.

There is therefore the need for providing a foam composition providing improved mechanical properties upon dispensing and applications. There is also the need for providing an improved foam composition, particularly for indoor applications. There is also the need for providing an environmentally friendly foam composition. There is also the need for providing greener, more sustainable foam composition. There is also the need for providing a composition, which does not require any specific equipment for dispensing it, and which is not harmful to human health. There is also the need for providing a composition, which is not harmful for the environment, including the flora and the fauna. There is also the need for providing a composition, which is cost-efficient. There is also the need for providing a composition, which is suitable for use by both professional craftsmen and DIY consumers.

### Summary of the invention

It is a first object of the invention to provide a foam composition comprising, by total weight of the composition, in an aqueous solvent: from 25 to 45 % of at least one binding agent, wherein the binding agent is an acrylic polymer; from 10 to 30 % of at least one filler, wherein the filler comprises at least one hollow microsphere particle; from 0.05 to 1 % of at least one dispersing agent; and from 0.5 to 3 % of at least one lubricating agent.

In some embodiments, the binding agent is a styrene-acrylic ester copolymer.

In some embodiments, the filler consists of at least one hollow microsphere particle.

In some embodiments, the filler comprises a mixture of at least one hollow microsphere particle and at least one additional filler.

In some embodiments, the dispersing agent is selected from the group consisting of salts of acrylic polymers.

In some embodiments, the lubricating agent is selected from the group consisting of salts of fatty acids (C12-20).

In some embodiments, the composition further comprises at least one additional compound selected from the group consisting of at least one plasticizing agent, at least one thickening and rheology modifying agent, at least one flame retarding agent, at least one antifreeze agent, and their mixtures.

In some embodiments, the composition is substantially free of isocyanates.

In some embodiments, the composition is substantially free of phthalates.

In some embodiments, the composition has a viscosity from 5,000 to 50,000 mPa.s.

In some embodiments, the composition has a density from 950 to 1,050 kg/m³.

It is a second object of the invention to provide a foam product comprising: a foam composition as described herewith; at least one propellant; a can; a sealing and dispensing head; and optionally an applicator; wherein the foam composition is stored in the can in the presence of the propellant and sealed.

In some embodiments, the propellant is selected from the group consisting of propane, isobutane, dimethylether and mixtures therefore.

In some embodiments, the propellant and the composition are mixed together in a weight ratio from 5:95 to 25:75.

It is a third object of the invention to provide a method for obtaining a coating foam, comprising the steps of: providing a foam composition, as described herewith; dispensing the foam composition as a foam; and applying the foam onto a substrate.

The inventors have shown that the foam composition provides improved mechanical properties, particularly by comparison with a foam composition being substantially free of fillers, particularly hollow microsphere particles and optionally additional fillers. Improved mechanical properties are particularly wanted for all indoor applications, for closing gaps in partition walls and floors, for sealing pipe penetrations through walls and ceiling, and for sealing linear joints. The foam composition, the foam product and/or the foam obtained upon the dispensing of the foam product comprise satisfactory properties, particularly in terms of viscosity, pH, density, tack-free time, cutting time, curing time, acoustic insulation, thermal conductivity, shelf life and shrinkage.

### Description of embodiments

The invention will now be described in more detail without limitation in the following description.

Throughout the description, all the percentages of the various constituents of the component(s) are given by weight (%w/w), except if mentioned otherwise. The concentration ranges have to be considered as including the limits.

By "substantially free" is meant a composition comprising less than 1 %, preferably less than 0.1 %, preferably less than 0.01 %, preferably about 0 %, of a compound, by total weight of the composition.

By "foam composition" is meant a composition, which is dispensed as a foam. The composition is meant as being the composition without the propellants. Hence, the expression "by total weight of the composition" means the proportion of a compound in the composition, without taking into consideration the proportion in propellants.

By "foam product" is meant a packaged foam composition i.e, a foam composition stored in a suitable can in liquid form in presence of at least one propellant.

By "foam" is meant the foam, which is obtained upon dispensing the packaged foam composition.

### Foam composition

In one aspect, the present invention relates to a foam composition.

### Binding agents

The composition comprises at least one binding agent. The expressions "binding agent" or "binder" may be used interchangeably, and designates the acrylic polymer *per se.*

The composition may comprise from 25 to 45 %, preferably from 30 to 40 %, of at least one binding agent, by total weight of the composition.

The binding agent may be selected from an acrylic polymer; preferably the binding agent is a styrene-acrylic ester copolymer.

The binding agent may be provided as a dispersed acrylic polymer in an aqueous solvent.

A suitable binding agent is commercially available under the tradename Acronal^{®} Foam 5842 by BASF, which comprises about 50 % of a styrene-acrylic ester copolymer in water (dispersion).

### Dispersing agents

The composition comprises at least one dispersing agent. The expressions "dispersing agent" or "dispersant" may be used interchangeably.

The composition may comprise from 0.05 to 1 %, preferably from 0.1 to 0.5 %, of at least one dispersing agent, by total weight of the composition.

The dispersing agent may be selected from the group consisting of salts of acrylic polymers; preferably from the group consisting of ammonium salts of acrylic polymers.

A suitable dispersing agent is commercially available under the tradename Dispex^{®} AA 4030 by BASF, which comprises about 30 % of a sodium salt of acrylic polymers in water (solution).

### Lubricating agents

The composition comprises at least one lubricating agent. The expressions "lubricating agent" and "lubricant" are used interchangeably.

The composition may comprise from 0.5 to 3 %, preferably from 1 to 2.5 %, of at least one lubricating agent, by total weight of the composition.

The lubricating agent may be selected from the group consisting of salts of fatty acids (C12-20); preferably from the group consisting of stearate salts, palmitate salts, oleate salts and mixtures thereof; preferably from the group consisting of stearate salts; preferably from the group consisting of ammonium stearate, sodium stearate, potassium stearate and their mixtures.

Suitable lubricating agents are commercially available under the tradename Ammoniumstearat by Baerlocher GmbH (for example Ammoniumstearat 35 %H), which comprises about 35 % of ammonium stearate in water.

### Fillers

The composition may comprise from 10 to 30 %, preferably from 12 to 25 %, of at least one filler, by total weight of the composition.

The filler comprises at least one hollow microsphere particle and optionally at least one additional filler.

The hollow microsphere particles may be selected from the group consisting of ceramic hollow microsphere particles, glass hollow microsphere particles, plastic hollow microsphere particles, carbon hollow microsphere particles and mixtures thereof; preferably the hollow microsphere particles are hollow glass microsphere particles. Hollow glass microsphere particles are also known as glass bubbles, microbubbles and microballons.

The hollow microsphere particles may have a mean particle size (by volume) from 5 to 200 µm, preferably from 10 to 120 µm.

The hollow microsphere particles may have a density from 0.01 to 1 g/cm³.

The additional fillers may be selected from the group consisting of calcium carbonate, mica, clay, aluminium trihydrate, talc, and mixtures thereof. The additional fillers are not flame retarding agent.

In one embodiment, the filler consists of at least one hollow microsphere particle (and is free of additional fillers). In this embodiment, the composition may comprise from 10 to 30 %, preferably from 12 to 25 %, of a filler consisting of at least one hollow microsphere particle, by total weight of the composition.

In an alternative embodiment, the filler comprises a mixture of at least one hollow microsphere particle and at least one additional filler. In this embodiment, the mixture comprises at least 20 % of the hollow microsphere particle, by total weight of the mixture, the remaining consisting of the additional filler.

Suitable hollow microsphere particles are commercially available under the tradenames Glass Bubbles K20, Glass Bubbles K20HS, Glass Bubbles H28HS from 3M^{™}, poraSpheres^{®} from Dennert Poraver GmbH, and Omyasphere^{®} 953 from Omya.

Additional fillers are commercially available under the tradenames Speswhite^{®} from Imerys, Finntalc^{®} M30 from Elementis and Omyasphere^{®} 220T-FQ from Omya.

### Aqueous solvents

The composition comprises at least one aqueous solvent (q.s. 100 %).

The composition may comprise at least 20 %, preferably at least 25 %, preferably at least 30 %, of at least one aqueous solvent, by total weight of the composition. For example, the composition may comprise from 30 to 60 % of an aqueous solvent.

The aqueous solvent may be selected from the group consisting of water, a glycol-based solvent, an ester alcohol, or mixtures thereof.

Suitable glycol-based solvents are commercially available under the tradenames Solvenon^{®} from BASF (for example Solvenon^{®} pNB) and Texanol^{™} Ester Alcohol from Eastman (2,2,4-trimethyl-1,3-pentanediol mono(2-methylpropanoate)).

### Plasticizing agents

The composition comprises at least one plasticizing agent. The expressions "plasticizing agent" or "plasticizer" may be used interchangeably.

The composition may comprise from 0 to 4 %, preferably from 0 to 3 %, of at least one plasticizing agent, by total weight of the composition.

The plasticizing agent may be selected from the group consisting of glycol ethers. For example, the plasticizing agent may be bis(butyl carbitol) formal.

Suitable plasticizing agents are commercially available under the tradename Efka^{®} by BASF (for example Efka^{®} PL 5651), which consists of bis(butyl carbitol) formal.

### Thickening and rheology modifying agents

The composition comprises at least one thickening and rheology modifying agent. The expressions "thickening and rheology modifying agent" or "thickener and rheology modifier" may be used interchangeably.

The composition may comprise from 0 to 5 %, preferably from 0 to 3.5 %, of at least one thickening and rheology modifying agent, by total weight of the composition.

The thickening and rheology modifying agent may be selected from the group consisting of silicas, preferably the thickening and rheology modifying agent is fumed silica.

Suitable thickening and rheology modifying agents are commercially available under the tradename Aerosil^{®} by Evonik (for example Aerosil^{®} R 8200), which consists of fumed silica.

### Flame retarding agents

The composition comprises at least one flame retarding agent. The expressions "flame retarding agent" and "flame retardant" are used interchangeably. The flame retarding agent is different from the additional fillers described above.

The composition may comprise from 0 to 30 %, of at least one flame retarding agent, by total weight of the composition.

For example, the flame retarding agent may be aluminium hydroxide, ammonium polyphosphates or any other suitable flame retarding agents.

Suitable flame retarding agents are commercially available under the tradenames Apyral^{®} 60 CD by Nabaltec, which consists of aluminium hydroxide, or FR CROS^{®} 486 by Budenheim, which consists of ammonium polyphosphates.

### Antifreezing agents

The composition comprises at least one antifreezing agent.

The composition may comprise from 0 to 3 %, preferably from 0 to 2 %, of at least one antifreezing agent, by total weight of the composition.

For example, the antifreeze agent may be monoethylene glycol.

A suitable antifreezing agent is commercially available from Sabic.

### Other compounds (substantially free of)

The composition is substantially free of isocyanate compounds, including isocyanate monomers.

The composition is substantially free of phthalate compounds.

### Foam product

In a second aspect, the present invention relates to a foam product.

The composition is stored in a suitable can in liquid form in presence of at least one propellant.

The composition is stored as a one-component composition. By "one-component composition" is meant a composition which is stored as a ready-to-use composition, and which can therefore be dispensed, without prior mixture with at least one additional component (except for the propellants).

The propellants and the composition are mixed together in a weight ratio from 5:95 to 25:75, preferably from 10:90 to 20:80.

The propellant may be selected from the group consisting of propane, isobutane, dimethylether and mixtures therefore.

The composition is stored under a pressure from 3.10⁵ to 9.10⁵ Pa, preferably from 5.10⁵ to 7.10⁵ Pa, at a temperature of about 20°C.

The can may be selected from the group consisting of tin plated coated can.

The can may be sealed with a suitable sealing and dispensing head.

The composition may be dispensed using a suitable applicator.

### Suitable applications

The foam obtained upon dispensing the composition is suitable for use on all indoor (interior) applications of the conventional polyurethane foam compositions. For example, the composition may be used for closing gaps in partition walls and floors, for sealing pipe penetrations through walls and ceiling, for sealing linear joints.

The foam obtained upon dispensing the composition is paintable e.g., using water-based and synthetic spray paints.

### Properties of the foam composition, the foam product and the foam obtained upon the dispensing of the foam composition

The foam composition comprises a viscosity from 5,000 to 50,000 mPa.s. The viscosity may be measured using the standard method, using a conventional Brookfield apparatus (shear rate: spindle T-A at 5 rpm, temperature: 23°C).

The foam composition comprises a pH from 7.5 to 10.5, preferably from 8 to 10.

The foam composition comprises a density from 950 to 1,050 kg/m³.

The foam obtained upon dispensing of the composition comprises a tack-free time of at least 5 min, preferably from 5 to 15 min. The tack-free time may be measured using the standard method EN-17333-3.

The foam obtained upon dispensing of the composition comprises a cutting time of at least 24 h, preferably from 24 to 72 h. The cutting time may be measured using the standard method EN-17333-3.

The foam obtained upon dispensing of the composition comprises a curing time of at least 24 h, preferably from 24 to 72 h.

The foam obtained upon dispensing of the composition provide an acoustic insulation (sound insulation) of at least 40 dB², preferably of at least 50 dB², preferably at least 60 dB². The curing time may be measured using the standard method EN-12354-3.

The foam obtained upon dispensing of the composition comprises a thermal conductivity from 30 to 40 mW/m.K. The tensile strength may be measured using the standard method EN-17333-5.

The composition comprises a shelf life from 10 to 30 months, preferably from 15 to 20 months.

The foam obtained upon dispensing of the composition comprises a shrinkage of 10 % or less, preferably of 5 % or less. The shrinkage may be measured using the standard method EN-17333-2.

### Method for applicating the foam composition

In a third aspect, the present invention relates to a method for obtaining a coating foam.

The method comprises the step of providing a foam composition, as described above.

The method also comprises the step of dispensing the foam composition as a foam.

The method also comprises the step of applying the foam onto a suitable substrate, for example a ceiling, a floor, a wall, etc.

The method may also comprise the step of resting the applied foam, for it to dry and harden. The resting step may last for at least 24h, preferably from 24 to 72h.

### Examples

### Materials and equipment

Binding agent: Acronal^{®} Foam 5842 from BASF (dispersion of about 50 % of a styrene-acrylic ester copolymer in water)
Filler 1: Glass Bubbles K20 from 3M^{™}
Filler 2: Glass Bubbles K20HS from 3M^{™}
Filler 3: Glass Bubbles H28HS from 3M^{™}
Filler 4: Speswhite^{®} from Imerys
Filler 5: Finntalc^{®} M30 from Elementis
Filler 6: Omyasphere^{®} 953 from Omya
Dispersing agent: Dispex^{®} AA 4030 from BASF (solution of about 30 % of a sodium salt of acrylic polymers in water)
Lubricating agent: Ammoniumstearat 35 %H from Baerlocher GmbH (35 % of ammonium stearate in water)
Plasticizing agent: Efka^{®} PL 5651 from BASF (bis(butyl carbitol) formal)
Thickening and rheology modifying agent: Aerosil^{®} R 8200 from Evonik (fumed silica)
Antifreezing agent: Monoethylene glycol from Sabic^{®}
Flame retarding agent: Apyral^{®} 60 CD by Nabaltec (aluminium hydroxide)
Additional solvent 1: Solvenon^{®} PnB from BASF (propylene glycol monobutyl ether)
Additional solvent 2: Texanol^{™} Ester Alcohol from Eastman (2,2,4-trimethyl-1 ,3-pentanediol mono(2-methylpropanoate))
ester alcohol)

### Formulations:

Foam compositions A to O (without propellants), as shown in tables 1 to 3 below (weight percentages per total weight of the compositions), are provided.

**Table 1**

| | A | B | C | D | E |
|---|---|---|---|---|---|
| Binding agent | 73 | 76.84 | 69.5 | 68.81 | 68.81 |
| Filler 3 | 20 | 15.80 | 5 | 7.42 | 7.42 |
| Filler 4 | - | - | 15 | 12.38 | 12.38 |
| Dispersing agent | 1 | 1.05 | 1 | 0.99 | 0.99 |
| Lubricating agent | 5 | 5.26 | 5 | 4.95 | 4.95 |
| Plasticizing agent | 1 | 1.05 | - | - | - |
| Thickening agent | - | - | 1.5 | 1.49 | 1.49 |
| Antifreezing agent | - | - | - | 0.99 | 0.99 |
| Additional solvent 1 | - | - | 3 | 2.97 | 2.97 |
| Total weight (total %) | 100 | 100 | 100 | 100 | 100 |

**Table 2**

| | F | G | H | I | J |
|---|---|---|---|---|---|
| Binding agent | 68.81 | 68.81 | 68.81 | 68 | 68 |
| Filler 3 | 12.38 | 17.33 | 4.45 | 4.40 | 4.89 |
| Filler 4 | 7.42 | 2.48 | 15.35 | 15.17 | - |
| Filler 5 | - | - | - | - | 14.68 |
| Dispersing agent | 0.99 | 0.99 | 0.99 | 1.17 | 1.17 |
| Lubricating agent | 4.95 | 4.95 | 4.95 | 4.89 | 4.89 |
| Thickening agent | 1.49 | 1.49 | 1.49 | 1.47 | 1.47 |
| Antifreezing agent | 0.99 | 0.99 | 0.99 | 0.98 | 0.98 |
| Additional solvent 1 | 2.97 | 2.97 | 2.97 | 2.94 | 2.94 |
| Additional solvent 2 | - | - | - | 0.98 | 0.98 |
| Total weight (total %) | 100 | 100 | 100 | 100 | 100 |

**Table 3**

| | K | L | M | N | O |
|---|---|---|---|---|---|
| Binding agent | 67.23 | 72.28 | 72.28 | 72.28 | 72.28 |
| Filler 1 | - | - | 19.8 | - | - |
| Filler 2 | - | - | - | 19.8 | - |
| Filler 3 | 4.84 | 19.8 | - | - | - |
| Filler 5 | 14.51 | - | - | - | - |
| Filler 6 | - | - | - | - | 19.8 |
| Dispersing agent | 1.16 | 0.99 | 0.99 | 0.99 | 0.99 |
| Lubricating agent | 4.84 | 4.95 | 4.95 | 4.95 | 4.95 |
| Plasticizing agent | - | 1.98 | 1.98 | 1.98 | 1.98 |
| Thickening agent | 2.58 | - | - | - | - |
| Antifreezing agent | 0.97 | - | - | - | - |
| Additional solvent 1 | 2.90 | - | - | - | - |
| Additional solvent 2 | 0.97 | - | - | - | - |
| Total weight (total %) | 100 | 100 | 100 | 100 | 100 |

Each foam composition (181 g) is stored in a coated Tin-plate can (520 mL) together with a propellant mixture being propane (8.7 g), isobutane (8.7 g) and dimethyl ether (26 g), in a weight ratio 87:13.

### Test

The mechanical properties of a foam according to the invention *i.e.,* obtained from the composition L (invention) has been tested *versus* a comparative foam *i.e.,* a foam obtained from a composition being free of fillers.

The comparative composition has the following formulation: 72.5 % of binding agent, 20 % of Apyral 60 CD, 1 % of dispensing agent, 5 % of lubricating agent, 0.5 % of plasticizing agent, 1 % of thickening and rheology modifying agent, by total weight of the composition.

The standard method EN 17333-4 (characterization of one component foam - Part 4: Mechanical strength) describes how the compressive strength of a foam can be determined, by testing of the foam resistance against an area distributed pressure.

It is tested the foam with the skin and without the skin. The samples of foam without the skin are obtained by cutting a foam sample from inside a large foam piece, where no skin is present.

| | Compressive strength at 10 % compression | Deformation of 6 mm |
|---|---|---|
| Inventive foam with skin | 0.8 kPa | 4 kPa |
| Inventive foam without skin | 1.4 kPa | 7 kPa |
| Comparative foam with skin | 0.7 kPa | 1.8 kPa |
| Comparative foam without skin | 0.9 kPa | 2.8 kPa |

The data obtained demonstrates that the foam according to the invention comprises superior mechanical properties *versus* the comparative foam.

## Claims

1. Foam composition comprising, by total weight of the composition, in an aqueous solvent:
- from 25 to 45 % of at least one binding agent, wherein the binding agent is an acrylic polymer;
- from 10 to 30 % of at least one filler, wherein the filler comprises at least one hollow microsphere particle;
- from 0.05 to 1 % of at least one dispersing agent; and
- from 0.5 to 3 % of at least one lubricating agent.

2. Foam composition, according to claim 1, wherein the binding agent is a styrene-acrylic ester copolymer.

3. Foam composition, according to any preceding claims, wherein the filler consists of at least one hollow microsphere particle.

4. Foam composition, according to claim 1 or 2, wherein the filler comprises a mixture of at least one hollow microsphere particle and at least one additional filler.

5. Foam composition, according to any preceding claims, wherein the dispersing agent is selected from the group consisting of salts of acrylic polymers.

6. Foam composition, according to any preceding claims, wherein the lubricating agent is selected from the group consisting of salts of fatty acids (C12-20).

7. Foam composition, according to claim 1, wherein the composition further comprises at least one additional compound selected from the group consisting of at least one plasticizing agent, at least one thickening and rheology modifying agent, at least one flame retarding agent, at least one antifreeze agent, and their mixtures.

8. Foam composition, according to any preceding claims, wherein the composition is substantially free of isocyanates.

9. Foam composition, according to any preceding claims, wherein the composition is substantially free of phthalates.

10. Foam composition, according to any preceding claims, wherein the composition has a viscosity from 5,000 to 50,000 mPa.s.

11. Foam composition, according to any preceding claims, wherein the composition has a density from 950 to 1,050 kg/m³.

12. Foam product comprising:
- a foam composition, according to any preceding claims;
- at least one propellant;
- a can;
- a sealing and dispensing head; and
- optionally an applicator;
wherein the foam composition is stored in the can in the presence of the propellant and sealed.

13. Foam product, according to claim 12, wherein the propellant is selected from the group consisting of propane, isobutane, dimethylether and mixtures therefore.

14. Foam product, according to any claim 12 or 13, wherein the propellant and the composition are mixed together in a weight ratio from 5:95 to 25:75.

15. A method for obtaining a coating foam, comprising the steps of:
- providing a foam composition, according to any claims 1 to 11;
- dispensing the foam composition as a foam; and
- applying the foam onto a substrate.
